# EUROPEAN PATENT APPLICATION

(11) **EP 4 407 347 A1**
(43) Date of publication of application: **31.07.2024**
(21) Application number: 22882662.4
(22) Date of filing: 09.10.2022
(51) Int. Cl.: G01S 17/14, G01S 7/48

(54) **DETECTION METHOD AND APPARATUS**

(30) Priority: 21.10.2021 CN 202111226292
(71) Applicant: Huawei Technologies Co., Ltd., Shenzhen, Guangdong 518129 (CN)
(72) Inventor: WANG, Chao, Shenzhen, Guangdong 518129 (CN)
(74) Representative: Körber, Martin Hans
(86) International application number: PCT/CN2022/124158
(87) International publication number: WO 2023/066052

(57) **Abstract**

A detection method and apparatus may be applied to the fields such as automated driving and intelligent driving, and in particular, to detection of a laser sensor. The method includes: controlling a transmitter to transmit a plurality of laser pulses in each subframe of a first frame, where each subframe is corresponding to a group of distance subintervals, and the first frame includes a plurality of subframes; controlling a detector to receive a plurality of signal pulses, where the plurality of signal pulses includes reflected signals for the plurality of laser pulses, and each of the plurality of signal pulses is corresponding to one distance subinterval in the group of distance subintervals; and determining information about a target object in a same distance subinterval based on signal pulses that are in the plurality of signal pulses and that are corresponding to the same distance subinterval. This method effectively improves detection performance of a LiDAR.

## Description

### CROSS-REFERENCE TO RELATED APPLICATIONS

This application claims priority to Chinese Patent Application No. 202111226292.7, filed with the China National Intellectual Property Administration on October 21, 2021 and entitled "DETECTION METHOD AND APPARATUS", which is incorporated herein by reference in its entirety.

### TECHNICAL FIELD

This application relates to the field of wireless communications technologies, and in particular, to a detection method and apparatus.

### BACKGROUND

With the development of science and technology, light detection and ranging (light detection and ranging, LiDAR) needs to be used for detection in more scenarios. For example, the LiDAR is used to sense a surrounding environment, and identify and track a target object. Currently, single photon avalanche diode (single photon avalanche diode, SPAD) detectors are widely used in the detection field because of advantages of fast response and high sensitivity. A detection principle of a SPAD LiDAR is mainly as follows: responding to incident energy of a single photon level, outputting a single photon count, and obtaining a timestamp of a corresponding target echo photon based on a distribution feature of histograms obtained through counting after a plurality of times of measurement, to obtain a distance of a detected target.

However, in an actual application scenario, a dark count of a detector often occurs due to a signal of noise generated by ambient light and a thermal diffusion or tunneling effect, or the like. As a result, the detector cannot effectively distinguish and output a single photon counting pulse, causing detection interference, reducing detection performance of a system, and thus reducing ranging accuracy of the LiDAR.

In conclusion, how to reduce interference and improve a capability of detecting a target object is a technical problem that urgently needs to be resolved currently.

### SUMMARY

This application provides a detection method and apparatus, to improve detection performance of a LiDAR.

According to a first aspect, an embodiment of this application provides a target object detection method, and the method includes:
controlling a transmitter to transmit a plurality of laser pulses in each subframe of a first frame, where each subframe is corresponding to a group of distance subintervals, and the first frame includes a plurality of subframes; controlling a detector to receive a plurality of signal pulses, where the plurality of signal pulses includes reflected signals for the plurality of laser pulses, and each of the plurality of signal pulses is corresponding to one distance subinterval in the group of distance subintervals; and determining information about a target object in a same distance subinterval based on signal pulses that are in the plurality of signal pulses and that are corresponding to the same distance subinterval.

According to the foregoing method, in this application, by using a relative relationship between time and space, a frame is divided into a plurality of subframes, a detection range is divided into a plurality of distance subintervals, and signal photon counting are performed on each distance subinterval in each subframe, so as to determine location information of a target object in a same distance subinterval based on a signal photon corresponding to the same distance subinterval. In the method, signal photons are counted at a granularity of a distance subinterval. Compared with signal photon counting at a granularity of a detection range, in the method in this application, a time window for counting the signal photons is reduced, and a quantity of noise photons counted in the window may be reduced, thereby reducing a chance of noise photon accumulation, and reducing a probability of a single photon count of a signal photon being submerged by a random noise photon count after being accumulated in time, which is helpful to increase a chance of signal photons being detected, and to improve detection performance of a LiDAR under strong background light.

In a possible implementation, a plurality of histograms corresponding to the same distance subinterval are determined based on the signal pulses that are in the plurality of signal pulses and that are corresponding to the same distance subinterval, where each distance subinterval of each subframe is corresponding to one histogram; and the information about the target object in the same distance subinterval is determined based on the plurality of histograms.

In a possible implementation, corresponding pixels on the transmitter are sequentially driven in a first manner, to transmit, by using the sender, the plurality of laser pulses corresponding to the first frame.

In a possible implementation, the first manner is sending a laser pulse by using a first array pattern.

In a possible implementation, the method further includes: transmitting a plurality of laser pulses in each subframe of a second frame.

In a possible implementation, corresponding pixels on the transmitter are sequentially driven in a second manner, to transmit, by using the sender, the plurality of laser pulses corresponding to the second frame, where the second manner is different from the first manner.

In a possible implementation, the second manner is sending a laser pulse by using a second array pattern, and the first array pattern is different from the second array pattern.

In a possible implementation, a vertical cavity surface emitting laser VCSEL may be further controlled to transmit the plurality of laser pulses in each subframe of the first frame; and/or a single photon avalanche diode SPAD detector may be further controlled to receive the plurality of signal pulses.

In a possible implementation, the VCSEL may be further controlled to transmit the plurality of laser pulses in each subframe of the first frame in a manner of cooperation with electrical scanning.

In a possible implementation, time lengths of distance subintervals in each subframe included in the first frame are the same in distribution; or time lengths of distance subintervals in at least two subframes included in the first frame are different in distribution.

In a possible implementation, the first frame includes at least two subframe groups, time lengths of distance subintervals of each subframe in a same subframe group are the same in distribution, and time lengths of distance subintervals of subframes in different subframe groups are different in distribution.

In a possible implementation, the first frame includes at least two subframe groups, time lengths of distance subintervals of each subframe in a same subframe group are the same in distribution; and time lengths of distance subintervals of subframes in adjacent subframe groups are different in distribution.

In a possible implementation, frame lengths of all subframes included in the first frame are the same; or the first frame includes at least two subframes with different frame lengths.

In a possible implementation, lengths of all distance subintervals in the group of distance subintervals are the same; or the group of distance subintervals includes at least two distance subintervals, and lengths of the at least two distance subintervals are different.

In a possible implementation, time lengths of all adjacent distance subintervals in the group of distance subintervals decrease sequentially according to a laser pulse transmission sequence; or time lengths of all adjacent distance subintervals in the group of distance subintervals first increase and then decrease according to a laser pulse transmission sequence.

In a possible implementation, a length of each distance subinterval in the group of distance subintervals is determined based on a relationship between a code of a distance subinterval and a proportion of the distance subinterval in the detection range, where codes of distance subintervals in the group of distance subintervals increase sequentially according to the laser pulse transmission sequence.

In a possible implementation, the relationship between a code of a distance subinterval and a proportion of the distance subinterval in the detection range may be that: A larger code of the distance subinterval indicates a smaller proportion of the distance subinterval in the detection range.

In a possible implementation, the relationship between a code of a distance subinterval and a proportion of the distance subinterval in the detection range may be that: A proportion of an odd-numbered distance subinterval in the detection range is less than a proportion of an even-numbered distance subinterval in the detection range.

According to a second aspect, this application provides a detection apparatus, where the detection apparatus is configured to implement the first aspect or any method in the first aspect, and includes corresponding function modules or units, respectively configured to implement the steps in the method in the first aspect. Functions may be implemented by hardware, or may be implemented by hardware by executing corresponding software, and the hardware or software includes one or more modules or units corresponding to the foregoing functions.

In a possible implementation, the detection apparatus includes at least one transceiver unit and a processing unit, where
the processing unit is configured to control the transceiver unit to transmit a plurality of laser pulses in each subframe of a first frame, where each subframe is corresponding to a group of distance subintervals, and the first frame includes a plurality of subframes;
the processing unit is further configured to control the transceiver unit to receive a plurality of signal pulses, where the plurality of signal pulses include reflected signals for the plurality of laser pulses, and each of the plurality of signal pulses is corresponding to one distance subinterval in the group of distance subintervals; and
the processing unit is further configured to determine information about a target object in a same distance subinterval based on signal pulses that are in the plurality of signal pulses and that are corresponding to the same distance subinterval.

According to a third aspect, a detection apparatus is provided, where the apparatus includes a processor and a memory. The memory is configured to store a computing program or instructions, and the processor is coupled to the memory. When the processor executes the computer program or the instructions, the apparatus is enabled to perform the first aspect or any method in the first aspect. The detection apparatus may be a first apparatus, or an apparatus that can support the first apparatus in implementing a function required by the method provided in the first aspect, for example, a chip system. For example, the detection apparatus may be a LiDAR, a terminal device carrying the LiDAR, or some components (for example, a chip) in the LiDAR. The terminal device may be, for example, an intelligent mobile terminal, a smart home device, a smart car, an intelligent wearable device, or the like.

According to a fourth aspect, this application provides a LiDAR, including a transmitter, a detector, and a controller, where
the light emitter is configured to transmit a laser pulse;
the detector is configured to receive a signal pulse; and
the controller is configured to control the transmitter to transmit a plurality of laser pulses in each subframe of a first frame, where each subframe is corresponding to a group of distance subintervals, and the first frame includes a plurality of subframes; control the detector to receive a plurality of signal pulses, where the plurality of signal pulses includes reflected signals for the plurality of laser pulses, and each of the plurality of signal pulses is corresponding to one distance subinterval in the group of distance subintervals; and determine information about a target object in a same distance subinterval based on signal pulses that are in the plurality of signal pulses and that are corresponding to the same distance subinterval.

In a possible implementation, the controller may further control a vertical cavity surface emitting laser VCSEL to transmit the plurality of laser pulses in each subframe of the first frame; and/or the controller may further control a single photon avalanche diode SPAD detector to receive the plurality of signal pulses.

In a possible implementation, the controller may further specifically control the VCSEL to transmit the plurality of laser pulses in each subframe of the first frame in a manner of cooperation with electrical scanning.

According to a fifth aspect, this application provides a LiDAR, where the LiDAR includes modules/units for performing the first aspect or the method of any possible implementation in the first aspect. These modules/units may be implemented by hardware, or may be implemented by hardware by executing corresponding software.

According to a sixth aspect, a terminal is provided, and the terminal may include the apparatus according to any one of the second aspect to the fifth aspect. Optionally, the apparatus may be an intelligent communications device, a smart home device, an intelligent manufacturing device, an intelligent transportation device, or the like, for example, a vehicle, an unmanned aerial vehicle, an unmanned transport vehicle, or a robot.

According to a seventh aspect, this application provides a chip, where the chip is connected to a memory, and is configured to read and execute a computer program or instructions stored in the memory, to implement the method according to the first aspect or any possible implementation of the first aspect.

According to an eighth aspect, a computer-readable storage medium is provided. The computer-readable storage medium stores a computer program or instructions, and when an apparatus executes the computer program or the instructions, the apparatus is enabled to perform the method according to the first aspect or any possible implementation of the first aspect.

According to a ninth aspect, a computer program product is provided, where the computer program product includes a computer program or instructions, and when an apparatus executes the computer program or the instructions, the apparatus is enabled to perform the method according to the first aspect or any possible implementation of the first aspect.

### BRIEF DESCRIPTION OF DRAWINGS

FIG. 1 is a schematic diagram of a principle of detecting a target by a LiDAR according to this application;
FIG. 2 is a schematic diagram of application scenarios of a LiDAR according to this application;
FIG. 3 is a schematic diagram of a structure of a LiDAR according to this application;
FIG. 4 is a schematic diagram of a relationship between frames and subframes according to this application;
FIG. 5 is a schematic diagram of a first distance subinterval division manner according to this application;
FIG. 6 is a schematic diagram of a second distance subinterval division manner according to this application;
FIG. 7 is a schematic diagram of a third distance subinterval division manner according to this application;
FIG. 8 is a schematic diagram of a fourth distance subinterval division manner according to this application;
FIG. 9 is a schematic diagram of a fifth distance subinterval division manner according to this application;
FIG. 10 is a schematic diagram of a sixth distance subinterval division manner according to this application;
FIG. 11 is a schematic flowchart of a detection method according to this application;
FIG. 12 is a schematic diagram of a structure of a first control apparatus according to this application;
FIG. 13 is a schematic diagram of a structure of a second control apparatus according to this application; and
FIG. 14 is a schematic diagram of a structure of another LiDAR according to this application.

### DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.
(1) Electrical scanning: The electrical scanning in the embodiments of this application is a manner of controlling a light emitting sequence of an array light source, is determined by the selection of different working areas that are determined by injection timing, an injection direction, and addressing control logic of a drive current, and does not need any mechanical scanning component.
(2) Global shutter: The global shutter in the embodiments of this application is a detector-exposure manner. Global means simultaneous collection and reading of data collected by all pixels of a two-dimensional detector array at one time, and is also referred to as global exposure, which is a common term in the field of imaging sensing.
(3) SPAD dynamic range: The SPAD dynamic range in this application may be used to indicate a quantity of minimum cells (cell) included in an SPAD detection unit. Each SPAD detection unit may be divided according to a minimum granularity. For example, the SPAD detection unit is divided according to a pixel granularity. The minimum granularity may be referred to as a minimum cell, namely, one pixel is one minimum cell.

A larger SPAD dynamic range indicates a larger quantity of minimum cells included in one SPAD detection unit. In addition, for each cell, the SPAD independently measures a single photon count. When a plurality of cells are binned as one SPAD detection unit, it is equivalent to perform binning on a plurality of single photon events of independently measuring cells. For example, each cell forms a statistical histogram of a single photon count. If nine cells are binned as an SPAD detection unit, histograms of the single photon counts of the nine cells are binned, which is equivalent to an increase in a quantity of single photon counts. Therefore, the larger the SPAD dynamic range, the higher the detection performance.

Based on different SPAD dynamic ranges, the embodiments of this application provide the following two ways of working of the SPAD.

Way 1: A single SPAD is used when working.

In a case of the way of working 1, each SPAD detection unit includes a minimum cell.

Generally, in a working environment in which a transmit signal is relatively strong and a sampling time is long enough, the way 1 may be used for detection, for example, commonly used for medical detection, lift-up detection, and the like.

Way 2: Binning (Binning) is used to combine a plurality of SPADs when working.

In an actual detection process, the way 1 cannot meet a detection requirement due to reasons such as temperature, ambient light, and electrical noise of a detector. In this case, the way of working 2 needs to be used for detection.

When the detection is performed in the way 2, a quantity of minimum cells for binning may be determined based on factors such as a current detection environment and a specification of the detector.

In addition, when the detection is performed in the way 2, a transmitter may superimpose a signal after binning together and transmit the signal in a manner of one pixel, and the detector may read the signal by using a corresponding equivalent pixel superimposed with the signal after binning.

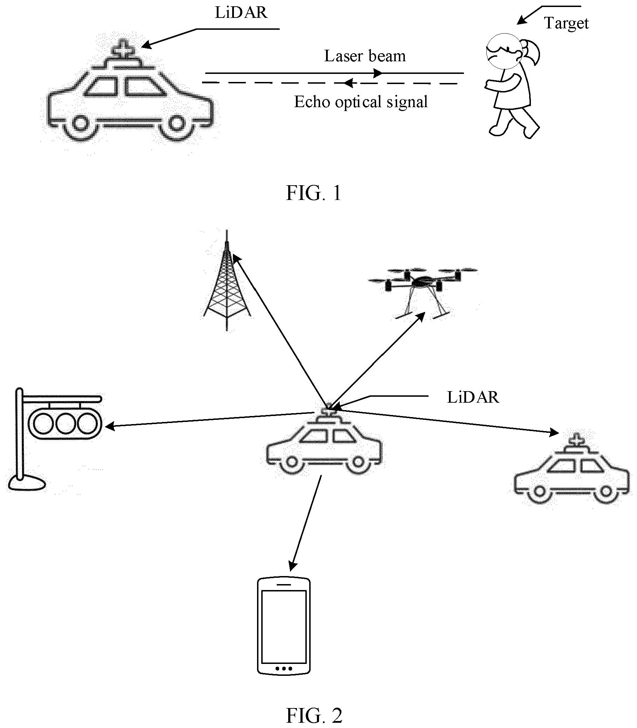

(4) Radar. The radar in the embodiments of this application may include a LiDAR. FIG. 1 is a schematic diagram of a principle of detecting a target by a LiDAR according to this application. The LiDAR includes a laser and a detector. The laser may be configured to transmit a laser beam, and along a transmission direction of an electromagnetic wave, there is a target within a specific distance. The electromagnetic wave may be reflected by a surface of the target, and a reflected signal is referred to as an echo signal. The echo signal is returned to a detector of the LiDAR. The detector may be configured to determine, based on the received echo signal and the transmitted laser beam, association information of the target, for example, location information of the target and a moving speed of the target.

The foregoing describes some terms used in this application. The following describes technical features and possible application scenarios used in this application. It should be noted that these explanations are intended for ease of understanding by a person skilled in the art, but do not constitute a limitation on the protection scope claimed in this application.

As shown in FIG. 2, in an optional application scenario of this application, a LiDAR may be installed on a mobile device. For example, in this application, when the LiDAR is applied to an automated driving scenario, or may be applied to a networked vehicle scenario, the LiDAR may be installed on a vehicle and used as a vehicle-mounted LiDAR (for example, a scanning vehicle-mounted frequency modulated continuous wave (frequency modulated continuous wave, FMCW) LiDAR). For another example, the LiDAR may be installed on an aircraft and used as an airborne LiDAR. In an optional application scenario of this application, the LiDAR may be further installed on a mobile platform, for example, a satellite. In this case, the LiDAR needs assistance of another apparatus in the mobile platform to determine a current position and steering information of the LiDAR, so that availability of measurement data may be ensured. In an optional application scenario of this application, the LiDAR may also be installed on a fixed platform. For example, the LiDAR may be installed on a roadside unit (road side unit, RSU), a roof, a base station, or the like. In a scenario in which the LiDAR is installed on the fixed platform, the LiDAR needs assistance of another apparatus on the fixed platform to determine a current location and steering information of the LiDAR, so that availability of measurement data may be ensured. In addition, the LiDAR in this application may be further applied to other possible scenarios, and the scenarios are not listed one by one herein.

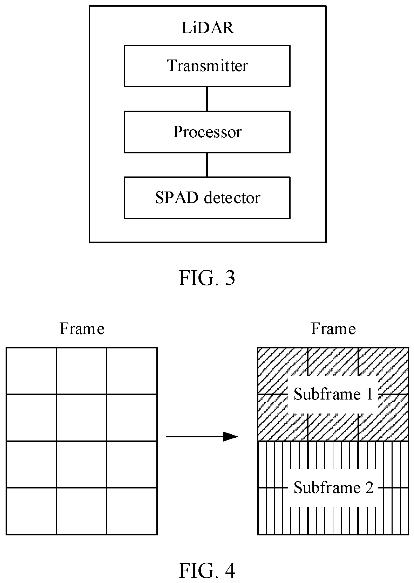

Based on the foregoing content, for example, FIG. 3 shows a schematic diagram of a structure of a LiDAR according to this application. The LiDAR includes a transmitter, an SPAD detector, and a processor. Certainly, the LiDAR may further include another device.

The transmitter is configured to transmit a pulse to the outside, and the pulse is reflected back after reaching a detected target (also referred to as a target object). The SPAD detector may receive a signal photon reflected by the target object.

The processor is configured to: count signal photons within a system measurement time range after several pulse transmissions, to obtain a histogram for the single photon count; perform data processing on the histogram by using a specific algorithm, to obtain a timestamp of the signal photon; and then calculate a distance between the LiDAR and the detected target based on the timestamp of the signal photon.

In an implementation, the LiDAR in this embodiment of this application may be a pure solid-state LiDAR. A transmitter of the pure solid-state LiDAR may perform detection by using a vertical cavity surface emitting laser (vertical cavity surface emitting laser, VCSEL) light source and in a manner of cooperation with electrical scanning, so that it may be better ensured that for any SPAD detection unit (which is also a pixel), there is plenty of signal photons in a measurement periodicity. Each SPAD detection unit may be connected to one or more time to digital converters (time to digital convert, TDC), and is responsible for outputting the detected single photon count to obtain a histogram. The single photon count herein includes a signal photon count and a noise photon count. The TDC is configured to convert an analog signal into a digital signal.

In an implementation, there is a one-to-one correspondence between pixels of the transmitter and pixels of the SPAD detector. Namely, a pulse transmitted by one pixel of the transmitter is received by a corresponding pixel of the SPAD detector. For example, a pulse transmitted by a pixel 1 of the transmitter is received by a pixel 1 of the SPAD detector, a pulse transmitted by a pixel 2 of the transmitter is received by a pixel 2 of the SPAD detector, and so on.

In another implementation, there is a one-to-more relationship between pixels of the transmitter and pixels of the SPAD detector. Namely, a pulse transmitted by one pixel of the transmitter is received by a plurality of corresponding pixels of the SPAD detector. For example, a pulse transmitted by a pixel 1 of the transmitter is received by a pixel 1 to a pixel 10 of the SPAD detector, a pulse transmitted by a pixel 2 of the transmitter is received by a pixel 11 to a pixel 20 of the SPAD detector, and so on.

In an implementation, different pixels on the transmitter may transmit pulses to the outside according to a specific rule. For example, each frame is corresponding to one pattern, and the pattern is corresponding to a plurality of pixels on the transmitter. Then, a pixel that needs to be driven to lighten each time in the pixels corresponding to the pattern, is determined by using a random number generator.

To reduce adverse impact of optical noise on ranging of a LiDAR, in this embodiment of this application, each frame is divided into N subframes, where N is an integer greater than 1, and time lengths of different subframes may be the same or may be different.

In this embodiment of this application, one frame may be understood as full field of view information output by the LiDAR, and the subframe may be understood as partial field of view information in the full field of view information obtained after the frame is divided based on space and/or time.

For example, from a perspective of time, it is assumed that one frame is corresponding to full field of view information of 100 ms, where a subframe A in the frame may be field of view information of 1 ms to 10 ms in the 100 ms.

For another example, from a perspective of space, the full field of view information corresponding to the frame may be divided into full field of view information of X*Y, where the subframe A in the frame may indicate partial field of view information of X'*Y' in space.

For example, as shown in FIG. 4, it is assumed that the full field of view information corresponding to the frame is divided into full field of view information of 4*3. The frame may include two subframes: a subframe 1 and a subframe 2. The subframe 1 may indicate, in space, partial field of view information of 2*3 corresponding to a diagonal pattern in FIG. 4, and the subframe 2 may indicate, in space, partial field of view information of 2*3 corresponding to the vertical stripe pattern in FIG. 4.

According to a distance subinterval division manner, a detection range of a LiDAR is divided into two or more distance subintervals, and lengths of different distance subintervals may be the same or may be different. The two or more distance subintervals herein may also be referred to as a group of distance subintervals.

In an implementation, it is considered that a signal attenuates with a distance in a quadratic manner, and noise is irrelevant to the distance. In this case, the distance subintervals may be reduced in sequence from near to far when the distance subintervals are divided into. Therefore, for a weak echo signal area, a window of noise accumulation may be compressed.

Different subframes may be corresponding to a same distance subinterval division manner, or may be corresponding to different distance subinterval division manners. Within the time of each subframe, a transmitter may transmit a plurality of pulses, for example, hundreds of pulses. Within the time of each subframe, different pulses transmitted are corresponding to a same distance subinterval division manner. It should be noted that a pulse sent in each subframe may be sent according to a fixed periodicity, or a pulse transmission periodicity may be dynamically modulated, for example, the pulse transmission periodicity may be continuously reduced, so as to increase a quantity of pulses transmitted within the time of one subframe, thereby improving detection accuracy of the target object.

The detection range may also be referred to as a system range, and means a farthest distance that a LiDAR can detect a target object.

In this embodiment of this application, one frame is divided into N subframes, which are respectively a subframe 1 to a subframe N. Time lengths of different subframes may be the same or may be different.

For example, it is assumed that a first frame is divided into four subframes, which are respectively a subframe 1 to a subframe 4.

In a case, time lengths of all subframes in the subframe 1 to the subframe 4 are the same. For example, the time lengths of all subframes in the subframe 1 to the subframe 4 are first time length.

In another case, time lengths of all subframes in the subframe 1 to the subframe 4 are different. For example, the time length of the subframe 1 is the first time length, the time length of the subframe 2 is second time length, the time length of the subframe 3 is third time length, and the time length of the subframe 4 is fourth time length. The first time length, the second time length, the third time length, and the fourth time length are different.

In still another case, time lengths of some subframes in the subframe 1 to the subframe 4 are the same. For example, the time length of the subframe 1 and the time length of the subframe 3 are the same, which is the first time length, and the time length of the subframe 2 and the time length of the subframe 4 are the same, which is the second time length, where the first time length is different from the second time length. For another example, the time length of the subframe 1 and the time length of the subframe 3 are the same, which is the first time length, the time length of the subframe 2 is the second time length, and the time length of the subframe 3 is the third time length. The first time length, the second time length, and the third time length are different.

The following describes, with reference to the accompanying drawings, distance subinterval division manners according to this embodiment of this application.

Division manner 1: The first frame is corresponding to a group of distance subintervals, and lengths of all distance subintervals in the group of distance subintervals are the same.

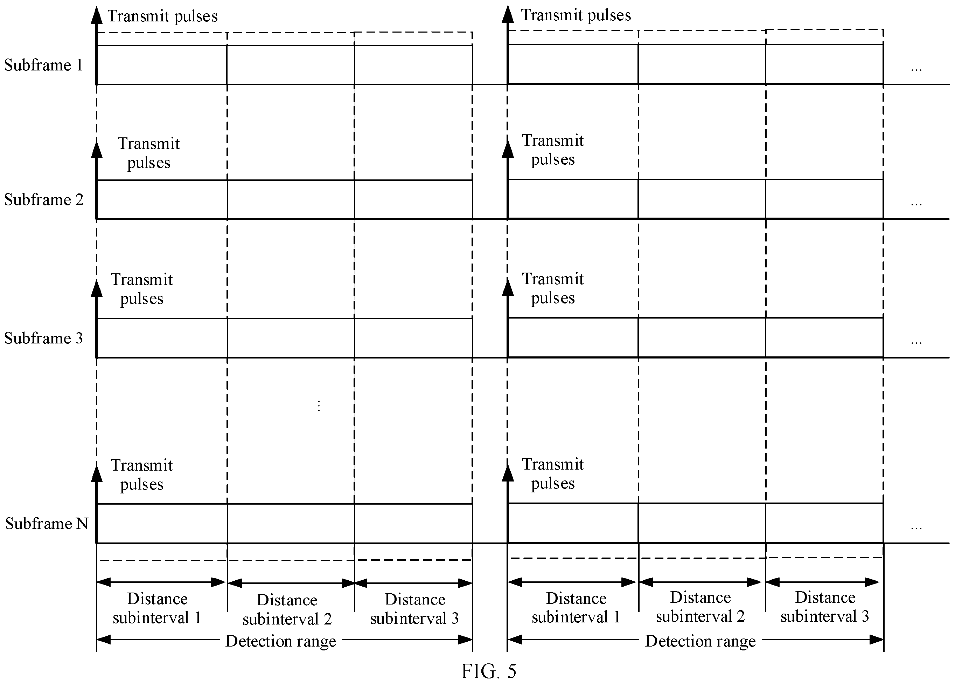

FIG. 5 is an example diagram of a first distance subinterval division manner according to an embodiment of this application.

A distance subinterval division manner corresponding to the subframe 1 is: dividing the detection range into a distance subinterval 1, a distance subinterval 2, and a distance subinterval 3. Lengths of the distance subinterval 1, the distance subinterval 2, and the distance subinterval 3 are the same, namely, it is equivalent to that the detection range is evenly divided into three distance subintervals.

Within the time of the subframe 1, each pulse transmitted by a transmitter is corresponding to a same distance subinterval division manner. Distance subinterval division manners respectively corresponding to the subframe 2 to the subframe N are the same as the distance subinterval division manner corresponding to the subframe 1. In addition, within the time of each of the subframe 2 to the subframe N, each pulse transmitted by the transmitter is corresponding to a same distance subinterval division manner.

Division manner 2: The first frame is corresponding to a group of distance subintervals, and lengths of at least two distance subintervals in the group of distance subintervals are different.

In this embodiment of this application, there are a plurality of division cases in which the lengths of at least two distance subintervals in the group of distance subintervals are different. This is not specifically limited to the following four cases.

Case 1: In a group of distance subintervals, time lengths of the distance subintervals decrease sequentially according to a laser pulse transmission sequence.

Optionally, in this embodiment of this application, the LiDAR may determine the length of each distance subinterval in the group of distance subintervals based on code sizes of the distance subintervals, where codes of the distance subintervals in the group of distance subintervals increase sequentially according to the laser pulse transmission sequence, and a larger code indicates smaller length of a corresponding distance subinterval.

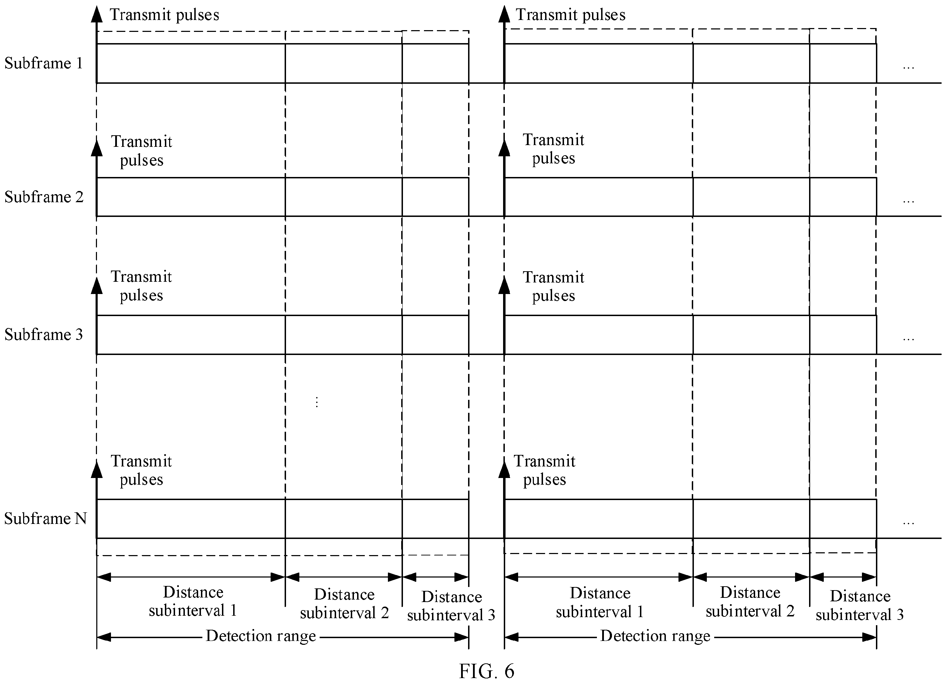

FIG. 6 is an example diagram of a second distance subinterval division manner according to an embodiment of this application.

A distance subinterval division manner corresponding to the subframe 1 is: dividing the detection range into a distance subinterval 1, a distance subinterval 2, and a distance subinterval 3. Lengths of the distance subinterval 1, the distance subinterval 2, and the distance subinterval 3 decrease sequentially. Within the time of the subframe 1, each pulse transmitted by a transmitter is corresponding to a same distance subinterval division manner.

Distance subinterval division manners respectively corresponding to the subframe 2 to the subframe N are the same as the distance subinterval division manner corresponding to the subframe 1. In addition, within the time of each of the subframe 2 to the subframe N, each pulse transmitted by the transmitter is corresponding to a same distance subinterval division manner.

Case 2: In a group of distance subintervals, time lengths of the distance subintervals first increase and then decrease according to a laser pulse transmission sequence.

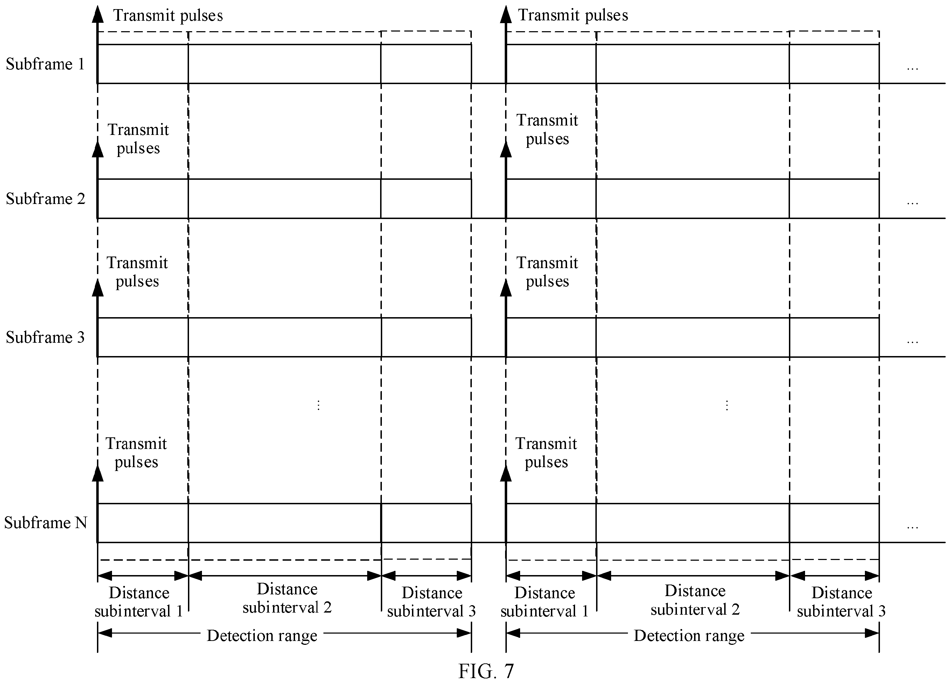

FIG. 7 is an example diagram of a third distance subinterval division manner according to an embodiment of this application.

A distance subinterval division manner corresponding to the subframe 1 is: dividing the detection range into a distance subinterval 1, a distance subinterval 2, and a distance subinterval 3. Lengths of the distance subinterval 1, the distance subinterval 2, and the distance subinterval 3 first increase and then decrease. For example, the length of the distance subinterval 1 is less than the length of the distance subinterval 2, the length of the distance subinterval 2 is greater than the length of the distance subinterval 3, and the length of the distance subinterval 1 is equal to the length of the distance subinterval 3.

Within the time of the subframe 1, each pulse transmitted by a transmitter is corresponding to a same distance subinterval division manner. Distance subinterval division manners respectively corresponding to the subframe 2 to the subframe N are the same as the distance subinterval division manner corresponding to the subframe 1. In addition, within the time of each of the subframe 2 to the subframe N, each pulse transmitted by the transmitter is corresponding to a same distance subinterval division manner.

Case 3: In a group of distance subintervals, time lengths of the distance subintervals increase sequentially according to a laser pulse transmission sequence.

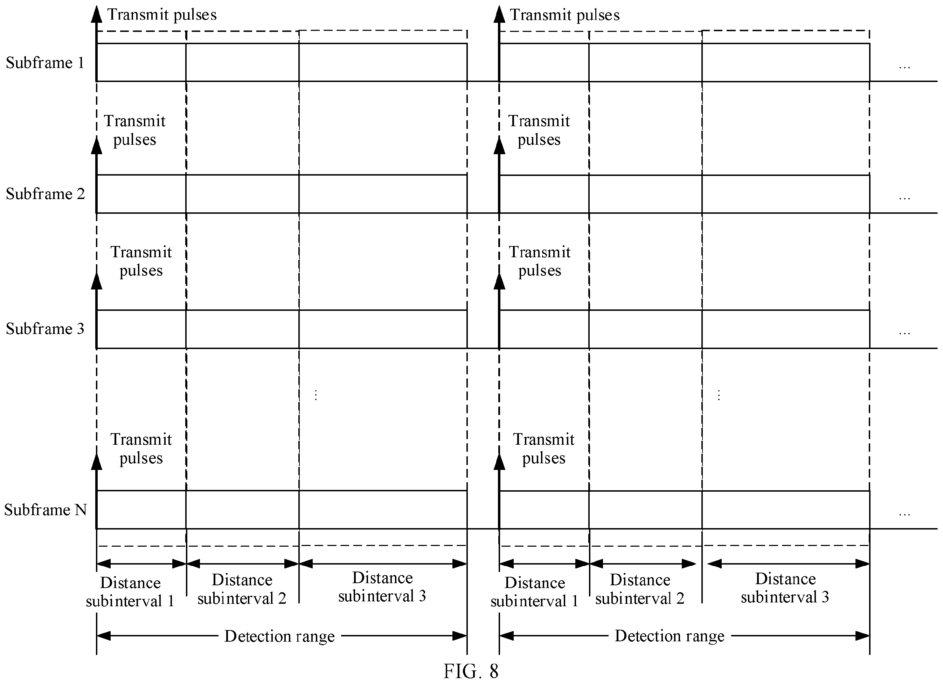

FIG. 8 is an example diagram of a fourth distance subinterval division manner according to an embodiment of this application.

A distance subinterval division manner corresponding to the subframe 1 is: dividing the detection range into a distance subinterval 1, a distance subinterval 2, and a distance subinterval 3. Lengths of the distance subinterval 1, the distance subinterval 2, and the distance subinterval 3 increase sequentially. Within the time of the subframe 1, each pulse transmitted by a transmitter is corresponding to a same distance subinterval division manner.

Distance subinterval division manners respectively corresponding to the subframe 2 to the subframe N are the same as the distance subinterval division manner corresponding to the subframe 1. In addition, within the time of each of the subframe 2 to the subframe N, each pulse transmitted by the transmitter is corresponding to a same distance subinterval division manner.

Case 4: The first frame includes at least two subframe groups, time lengths of distance subintervals of each subframe in a same subframe group are the same in distribution, and time lengths of distance subintervals of subframes in different subframe groups are different in distribution.

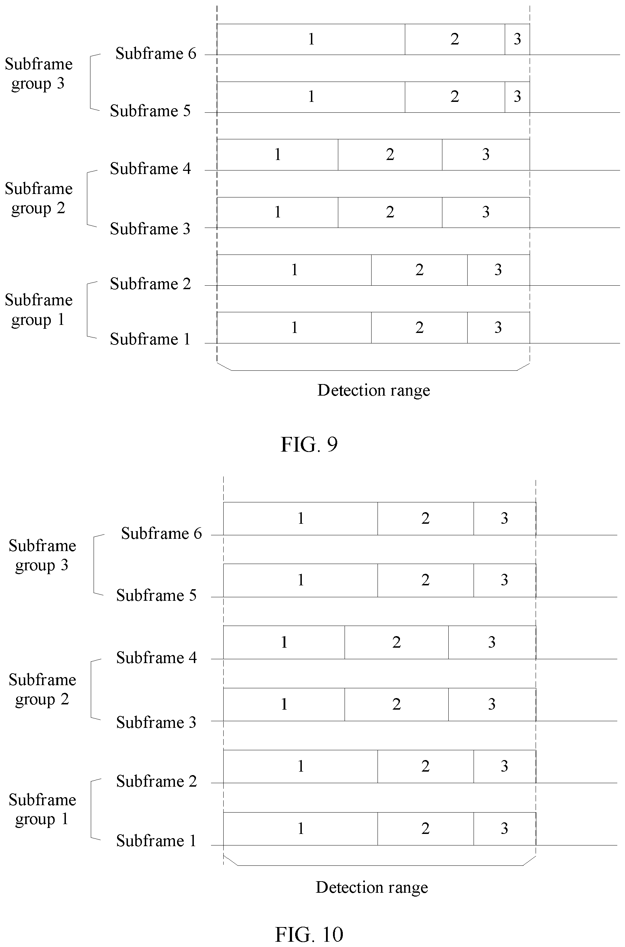

FIG. 9 is an example diagram of a fifth distance subinterval division manner according to an embodiment of this application.

It is assumed that the first frame includes subframes 1 to 6, where the subframe 1 and the subframe 2 are in a group, the group is a subframe group 1, and time lengths of distance subintervals of the subframe 1 and the subframe 2 in a same subframe group are the same in distribution; the subframe 3 and the subframe 4 are in a group, the group is a subframe group 2, and time lengths of distance subintervals of the subframe 3 and the subframe 4 in a same subframe group are the same in distribution; and the subframe 5 and the subframe 6 are in a group, the group is a subframe group 3, and time lengths of distance subintervals of the subframe 5 and the subframe 6 in a same subframe group are the same in distribution. Time lengths of the distance subintervals among the subframe group 1, the subframe group 2, and the subframe group 3 are different from each other in distribution.

Case 5: The first frame includes at least two subframe groups, time lengths of distance subintervals of each subframe in a same subframe group are the same in distribution, and time lengths of distance subintervals of two adjacent subframes are different in distribution.

FIG. 10 is an example diagram of a sixth distance subinterval division manner according to an embodiment of this application.

It is assumed that the first frame includes subframes 1 to 6, where the subframe 1 and the subframe 2 are in a group, the group is a subframe group 1, and time lengths of distance subintervals of the subframe 1 and the subframe 2 in a same subframe group are the same in distribution; the subframe 3 and the subframe 4 are in a group, the group is a subframe group 2, and time lengths of distance subintervals of the subframe 3 and the subframe 4 in a same subframe group are the same in distribution; and the subframe 5 and the subframe 6 are in a group, the group is a subframe group 3, and time lengths of distance subintervals of the subframe 5 and the subframe 6 in a same subframe group are the same in distribution. The subframe group 1 is adjacent to the subframe group 2, so that time lengths of distance subintervals between the subframe group 1 and the subframe group 2 are different in distribution, and the subframe group 1 is not adjacent to the subframe group 3, so that time lengths of distance subintervals between the subframe group 1 and the subframe group 3 may be the same in distribution.

Certainly, in actual application, different subframes may also be corresponding to different distance subinterval division manners. For example, if N=10000, subframes 1 to 5000 may be corresponding to a same distance subinterval division manner 1, subframes 5001 to 10000 may be corresponding to a same distance subinterval division manner 2, and the distance subinterval division manner 1 is different from the distance subinterval division manner 2.

In addition, the content in FIG. 5 to FIG. 10 does not constitute a limitation on the distance subinterval division manner according to this application. Any variation of the content in FIG. 5 to FIG. 10 falls within the protection scope of this application.

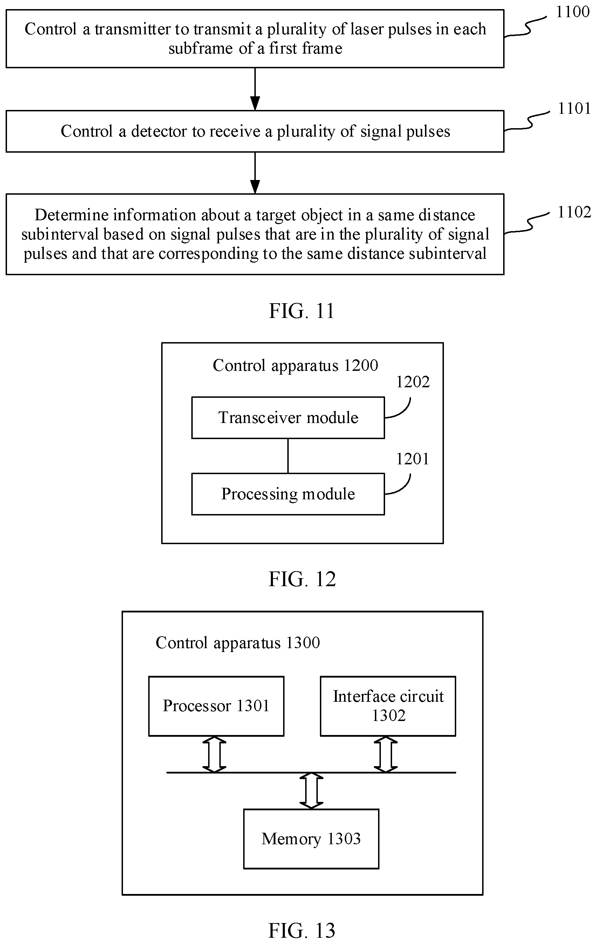

Based on the foregoing content, FIG. 11 is a schematic method flowchart of a detection method according to this application. The method is executed by a LiDAR and includes the following steps.

Step 1100: The LiDAR controls a transmitter to transmit a plurality of laser pulses in each subframe of a first frame.

Each subframe is corresponding to a group of distance subintervals, the group of distance subintervals is obtained by dividing a detection range of the LiDAR, and each of the plurality of pulses is corresponding to the group of distance subintervals. For a relationship between a subframe and a distance subinterval, refer to the foregoing descriptions. In some possible implementations, the group of distance subintervals may alternatively be obtained by dividing a part of the detection range.

FIG. 5 is used as an example, within the time of the subframe 1, the transmitter transmits a plurality of pulses, and each pulse is corresponding to a distance subinterval 1, a distance subinterval 2, and a distance subinterval 3. Similarly, within the time of each of the subframe 2 to the subframe N, the transmitter transmits a plurality of pulses, and each pulse is corresponding to a distance subinterval 1, a distance subinterval 2, and a distance subinterval 3.

Further, in this embodiment of this application, when the LiDAR controls the transmitter to transmit laser pulses in different frames, different sending manners may be used.

For example, in this embodiment of this application, when the LiDAR controls the transmitter to transmit the laser pulses within the time of a first frame, corresponding pixels on the transmitter may be sequentially driven in a first sending manner, to transmit a plurality of laser pulses corresponding to the first frame by using the transmitter. When the LiDAR controls the transmitter to transmit the laser pulses within the time of a second frame, corresponding pixels on the transmitter may be sequentially driven in a second sending manner, to transmit a plurality of laser pulses corresponding to the second frame by using the transmitter. The second sending manner is different from the first sending manner.

It may be understood that different sending manners are corresponding to different pixel images. For example, the first sending manner is corresponding to a first array pattern, the second sending manner is corresponding to a second array pattern, and the first array pattern is different from the second array pattern.

In this embodiment of this application, when the LiDAR controls the transmitter to transmit laser pulses within the time of different frames, a sending manner to be used may be determined based on different requirements, scenarios, or the like.

Step 1101: The LiDAR controls a detector to receive a plurality of signal pulses.

In this embodiment of this application, the plurality of signal pulses include reflected signals for the plurality of laser pulses, and each of the plurality of signal pulses is corresponding to one distance subinterval in the group of distance subintervals.

After the transmitter transmits the plurality of pulses to the outside, if there is a target object on a flight path of a pulse, the pulse may form reflection on the target object, so that the SPAD detector may receive a signal photon reflected by the target object, and the signal photon is a reflected signal for the pulse. Each signal photon is corresponding to one distance subinterval.

There may be a plurality of target objects on a flight path of a pulse, and each target object is located in one distance subinterval. There may be no target object in one distance subinterval, or there may be one or more target objects in one distance subinterval.

It should be noted that the SPAD detector can not only receive signal photons, but also receive noise photons generated by ambient light. In addition, the SPAD detector cannot distinguish whether the received photon is a signal photon or a noise photon.

Step 1102: The LiDAR determines information about a target object in a same distance subinterval based on signal pulses that are in the plurality of signal pulses and that are corresponding to a same distance subinterval.

Specifically, the LiDAR may determine, based on the signal pulses that are in the plurality of signal pulses and that are corresponding to a same distance subinterval, a plurality of histograms corresponding to the same distance subinterval. Each distance subinterval in each subframe is corresponding to one histogram, and then the LiDAR may determine information about a target object in the same distance subinterval based on the plurality of histograms.

For example, the LiDAR counts received photons (signal photons and/or noise photons) to obtain a plurality of histograms, where each distance subinterval of each subframe is corresponding to one histogram. Then, the LiDAR determines location information of the target object in the distance subinterval based on a histogram that is in the plurality of histograms and that is corresponding to the same distance subinterval.

FIG. 5 is used as an example, each subframe is corresponding to three distance subintervals, and 500 pulses are transmitted within the time of each subframe. In this case, the SPAD detector may receive reflected signals, namely, signal photons, for some or all of the 500 pulses, and each of these signal photons is corresponding to one of the three distance subintervals.

In a specific implementation, the SPAD detector further receives a plurality of noise photons. Among these noise photons, some noise photons are corresponding to the distance subinterval 1, some noise photons are corresponding to the distance subinterval 2, and other noise photons are corresponding to the distance subinterval 3. Thus, a processor of the LiDAR may count detected signal photons and noise photons, to obtain a histogram.

A distance subinterval 1 of the subframe 1 is corresponding to a histogram 1, a distance subinterval 2 of the subframe 1 is corresponding to a histogram 2, and a distance subinterval 3 of the subframe 1 is corresponding to a histogram 3. The histogram 1 is used to record a timestamp at which signal photons corresponding to the distance subinterval 1 are detected within the time of the subframe 1, the histogram 2 is used to record a timestamp at which signal photons corresponding to the distance subinterval 2 are detected within the time of the subframe 1, and the histogram 3 is used to record a timestamp at which signal photons corresponding to the distance subinterval 3 are detected within the time of the subframe 1.

In the example in FIG. 4, the distance subinterval division manners corresponding to the subframe 2 to the subframe N are the same as that corresponding to the subframe 1. Therefore, a distance subinterval 1 of the subframe 2 is corresponding to a histogram 4, a distance subinterval 2 of the subframe 2 is corresponding to a histogram 5, and a distance subinterval 3 of the subframe 2 is corresponding to a histogram 6. The histogram 4 is used to record a timestamp at which signal photons corresponding to the distance subinterval 1 are detected within the time of the subframe 2, the histogram 5 is used to record a timestamp at which signal photons corresponding to the distance subinterval 2 are detected within the time of the subframe 2, and the histogram 6 is used to record a timestamp at which signal photons corresponding to the distance subinterval 3 are detected within the time of the subframe 2.

By analogy, a distance subinterval 1 of the subframe N is corresponding to a histogram 3N-2, a distance subinterval 2 of the subframe N is corresponding to a histogram 3N-1, and a distance subinterval 3 of the subframe N is corresponding to a histogram 3N. The histogram 3N-2 is used to record a timestamp at which signal photons corresponding to the distance subinterval 1 are detected within the time of the subframe N, the histogram 3N-1 is used to record a timestamp at which signal photons corresponding to the distance subinterval 2 are detected within the time of the subframe N, and the histogram 3N is used to record a timestamp at which signal photons corresponding to the distance subinterval 3 are detected within the time of the subframe N.

The summary is as follows:
subframe 1: histogram 1, histogram 2, and histogram 3;
subframe 2: histogram 4, histogram 5, and histogram 6;
subframe N: histogram 3N-2, histogram 3N-1, and histogram 3N.

The distance subinterval 1 is corresponding to the histogram 1, the histogram 4, ..., and the histogram 3N-2, the distance subinterval 2 is corresponding to the histogram 2, the histogram 5, ..., and the histogram 3N-1, and the distance subinterval 3 is corresponding to the histogram 3, the histogram 6, ..., and the histogram 3N.

Therefore, location information of a target object in the distance subinterval 1 is determined based on the histogram 1, the histogram 4, ..., and the histogram 3N-2; location information of a target object in the distance subinterval 2 is determined based on the histogram 2, the histogram 5, ..., and the histogram 3N-1; and location information of a target object in the distance subinterval 3 is determined based on the histogram 3, the histogram 6, ..., and the histogram 3N.

The location information of the target object may be point cloud information of a point on the target object. A location of a target object is obtained through calculation based on point cloud information of a plurality of points on the target object.

For example, the location information of the target object in the distance subinterval 1 is determined based on the histogram 1, the histogram 4, ..., and the histogram 3N-2. The processor performs peak-seeking detection on each histogram in the histogram 1, the histogram 4, ..., and the histogram 3N-2, to obtain timestamps respectively corresponding to a plurality of peaks of each histogram, so as to obtain a timestamp distributed in a relatively centralized manner, and obtain location information of the target object through calculation based on the timestamp. In addition, a timestamp distributed in a relatively scattered manner is deleted.

For example, peak-seeking detection is performed on each histogram in the histogram 1, the histogram 4, ..., and the histogram 3N-2, to obtain a timestamp corresponding to each histogram. Each timestamp is corresponding to a peak, indicating that on the timestamp, a relatively large quantity of signal photons and/or noise photons are received and a relatively large quantity of single photons are generated. Assuming that all timestamps corresponding to the histogram 1, the histogram 4, ..., and the histogram 3N-2 are concentrated around the timestamps t1, t2, and t3, three pieces of location information are obtained through calculation according to t1, t2, and t3, respectively. The three pieces of location information may be corresponding to a same target object, or may be corresponding to different target objects.

According to the foregoing solution, by using a relative relationship between time and space, a frame is divided into a plurality of subframes, a detection range is divided into a plurality of distance subintervals, and signal photon counting are performed on each distance subinterval in each subframe, so as to determine location information of a target object in a same distance subinterval based on a signal photon corresponding to the same distance subinterval. Signal photons are counted at a granularity of a distance subinterval in the method. Compared with signal photon counting at a granularity of a detection range, in the method in this application, a time window for counting the signal photons is reduced, and a quantity of noise photons counted in the window may be reduced, thereby reducing a chance of noise photon accumulation, and reducing a probability of a single photon count of a signal photon being submerged by a random noise photon count after being accumulated in time, which is helpful to increase a chance of signal photons being detected, and to improve detection performance of a LiDAR under strong background light.

In addition, the content in FIG. 11 does not constitute a limitation on the detection method according to this application. Any variation of the content in FIG. 10 falls within the protection scope of this application.

The method and the apparatus are conceived based on a same or similar technical concept. The method and the apparatus have similar principles for resolving the problems. Therefore, for implementation of the apparatus and the method, refer to each other. Details of repeated parts are not described. The terms "apparatus" and "device" in the embodiments of this application may be used interchangeably. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that, in the description of this application, terms such as "first", "second", and "third" are merely used for distinguishing the description, but should not be understood as an indication or implication of relative importance, or should not be understood as an indication or implication of a sequence. Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise especially emphasized in another manner. The terms "include", "contain", "have", and their variants all mean "include but are not limited to", unless otherwise especially emphasized in another manner. To implement functions in the method provided in the foregoing embodiments of this application, an embodiment of this application further provides an apparatus, configured to implement the foregoing method. The apparatus may include a hardware structure and/or a software module, and implement the foregoing functions in a form of a hardware structure, a software module, or a combination of a hardware structure and a software module. Whether a function in the foregoing functions is performed in a form of a hardware structure, a software module, or a combination of a hardware structure and a software module depends on particular applications and design constraints of the technical solution.

The apparatus provided in the embodiments of this application may be a controller integrated with a processor, or may be a chip or a circuit that can perform a function corresponding to the foregoing method. The chip or the circuit may be disposed in a device such as the controller. Further, the apparatus provided in the embodiments of this application may be further implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

Division of functional modules may be performed on the apparatus provided in the embodiments of this application, for example, each functional module may be obtained through division based on a corresponding function, or two or more functions may be integrated into one processing module. The integrated module may be implemented in a form of hardware, or may be implemented in a form of a software functional module. It should be noted that the module division in the embodiments of this application is an example, and is merely logical function division. There may be another division manner in an actual implementation.

In a possible implementation, FIG. 12 is a schematic diagram of a structure of a control apparatus according to an embodiment of this application. The apparatus may be a controller, or may be an apparatus in a controller, or may be an apparatus that can be used in a matching manner with a controller. The apparatus 1200 may include: a processing module 1201 and a transceiver module 1202. Certainly, the apparatus 1200 may further include another module. This is not limited in this embodiment of this application, and only main function modules are shown. For example, the transceiver module 1202 may include a sending module and a receiving module. The sending module may be a transmitter, and the receiving module may be a detector.

The processing module 1201 is configured to control the transceiver module 1202 to transmit a plurality of laser pulses in each subframe of a first frame, where each subframe is corresponding to a group of distance subintervals, and the first frame includes a plurality of subframes. The processing module 1201 further controls the transceiver module 1202 to receive a plurality of signal pulses, where the plurality of signal pulses include reflected signals for the plurality of laser pulses, and each of the plurality of signal pulses is corresponding to one distance subinterval in the group of distance subintervals. Then, the processing module 1201 is configured to determine information about a target object in a same distance subinterval based on signal pulses that are in the plurality of signal pulses and that are corresponding to the same distance subinterval.

In an optional manner of this application, the processing module 1201 is specifically configured to:
determine a plurality of histograms corresponding to the same distance subinterval based on the signal pulses that are in the plurality of signal pulses and that are corresponding to the same distance subinterval, where each distance subinterval of each subframe is corresponding to one histogram; and determine the information about the target object in the same distance subinterval based on the plurality of histograms.

In an optional manner of this application, the processing module 1201 is specifically configured to:
sequentially drive corresponding pixels on the transmitter in a first manner, to transmit the plurality of laser pulses corresponding to the first frame by using the transmitter.

In an optional manner of this application, the processing module 1201 is further configured to:
transmit a plurality of laser pulses in each subframe of a second frame.

The processing module 1201 is specifically configured to:
sequentially drive the corresponding pixels on the transmitter in a second manner, to transmit the plurality of laser pulses corresponding to the second frame by using the transmitter, where the second manner is different from the first manner.

In an optional manner of this application, when controlling the transmitter to transmit the plurality of laser pulses in each subframe of the first frame, the processing module 1201 is specifically configured to:
control a vertical cavity surface emitting laser VCSEL to transmit the plurality of laser pulses in each subframe of the first frame; and/or
when controlling the detector to receive the plurality of signal pulses, the processing module 1201 is specifically configured to:
   control a single photon avalanche diode SPAD detector to receive the plurality of signal pulses.

In an optional manner of this application, when controlling the VCSEL to transmit the plurality of laser pulses in each subframe of the first frame, the processing unit 1201 is specifically configured to:
control the VCSEL to transmit the plurality of laser pulses in each subframe of the first frame in a manner of cooperation with electrical scanning.

In an optional manner of this application, time lengths of distance subintervals in each subframe included in the first frame are the same in distribution; or time lengths of distance subintervals in at least two subframes included in the first frame are different in distribution.

In an optional manner of this application, frame lengths of all subframes included in the first frame are the same; or the first frame includes at least two subframes with different frame lengths.

In an optional manner of this application, lengths of all distance subintervals in the group of distance subintervals are the same; or the group of distance subintervals includes at least two distance subintervals, and lengths of the at least two distance subintervals are different.

In an optional manner of this application, for the group of distance subintervals, time lengths of the distance subintervals decrease sequentially according to a laser pulse transmission sequence; or for the group of distance subintervals, time lengths of the distance subintervals first increase and then decrease according to a laser pulse transmission sequence.

It should be understood that in this embodiment of this application, the processing module 1201 may be implemented by a processor or a processor-related circuit component, and the transceiver module 1202 may be implemented by a transceiver, a transceiver-related circuit component, or a communications interface. It should be understood that the transceiver may include, for example, a transmitter and a receiver. The processor, the transmitter, and the receiver are coupled to each other. The transmitter and the receiver are implemented, for example, by an antenna, a feeder, and a codec in a radar apparatus. Alternatively, if the control apparatus is a chip disposed in a detection device, the transmitter and the receiver each are, for example, a communications interface in the chip. The communications interface is connected to a radio frequency transceiver component in the detection device, to implement information receiving and sending by using the radio frequency transceiver component.

FIG. 13 is another possible schematic diagram of a structure of a control apparatus 1300 according to an embodiment of this application. The control apparatus 13 may be a radar apparatus itself, or may be a chip or a circuit that can implement a function of the radar apparatus. For example, the chip or the circuit may be disposed in the radar apparatus. The control apparatus 1300 may include a processor 1301 (for example, the processing module 1201 may be implemented by using the processor 1301) and an interface circuit 1302 (for example, the transceiver module 1202 may be implemented by using the interface circuit 1302, and when the transceiver module includes a transmitter and a receiver, the transmitter, the receiver, and the interface circuit 1302 may be a same component). The processor 1301 may enable the control apparatus 1300 to implement the steps performed by the LiDAR in the method provided in the embodiment shown in FIG. 11. Optionally, the control apparatus 1300 may further include a memory 1303, and the memory 1303 may be configured to store instructions. The processor 1301 may enable the control apparatus 1300 to implement the steps performed by the radar apparatus in the method provided in the embodiment shown in FIG. 11 by executing the instructions stored in the memory 1303.

Further, the processor 1301, the interface circuit 1302, and the memory 1303 may communicate with each other by using an internal connection channel, to transmit a control signal and/or a data signal. The memory 1303 is configured to store a computer program. The processor 1301 may invoke the computer program from the memory 1303 and run the computer program, to control the interface circuit 1302 to receive a signal or send a signal, thereby completing the steps performed by the LiDAR in the method provided in the embodiment shown in FIG. 11. The memory 1303 may be integrated in the processor 1301, or may be disposed separately from the processor 1301.

Optionally, if the control apparatus 1300 is a device, the interface circuit 1302 may include a receiver and a sender. The receiver and the sender may be a same component or different components. When the receiver and the sender are a same component, the component may be referred to as a transceiver.

Optionally, if the control apparatus 1300 is a chip or a circuit, the interface circuit 1302 may include an input interface and an output interface. The input interface and the output interface may be a same interface, or may be different interfaces respectively.

Optionally, if the control apparatus 1300 is a chip or a circuit, the control apparatus 1300 may either not include the memory 1303, and the processor 1301 may read an instruction (a program or code) in an external memory at the exterior of the chip or the circuit, to implement the steps performed by the LiDAR in the method provided in the embodiment shown in FIG. 11.

Optionally, if the control apparatus 1300 is a chip or a circuit, the control apparatus 1300 may include a resistor, a capacitor, or another corresponding functional component, and the processor 1301 or the interface circuit 1302 may be implemented by using the corresponding functional component.

In an implementation, it may be considered that a function of the interface circuit 1302 may be implemented by using a transceiver circuit or a transceiver-dedicated chip. It may be considered that the processor 1301 may be implemented by a dedicated processing chip, a processing circuit, a processor, or a general-purpose chip.

In another implementation, it may be considered to implement the radar apparatus provided in this embodiment of this application by using a general-purpose computer. Namely, program code for implementing functions of the processor 1301 and the interface circuit 1302 is stored in the memory 1303, and the processor 1301 implements the functions of the processor 1301 and the interface circuit 1302 by executing the program code stored in the memory 1303.

Functions and actions of the foregoing listed modules or units in the control apparatus 1300 are merely examples for description. The functional units in the control apparatus 1300 may be configured to perform actions or processing processes performed by the LiDAR in the embodiment shown in FIG. 11. To avoid repeated description, detailed description is omitted herein.

In still another optional manner, when software is used to implement the radar apparatus, the radar apparatus may be implemented completely or partially in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, including one or more usable media that are integrated. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It should be noted that the processor included in the radar apparatus for executing the detection method provided in this embodiment of this application may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. The processor may also be a combination of processors implementing a computing function, for example, a combination of one or more microprocessors, or a combination of a DSP and a microprocessor.

Steps of the method or algorithm described in combination with embodiments of this application may be implemented by hardware, or may be implemented by a processor by executing software instruction. The software instruction may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. An example of a storage medium is coupled to the processor, so that the processor can read information from the storage medium and can write information into the storage medium. Certainly, the storage medium may alternatively be a constituent part of the processor. The processor and the storage medium may be disposed in an ASIC. In addition, the ASIC may be located in a radar apparatus or a detection device on which a radar apparatus is installed. Certainly, the processor and the storage medium may alternatively exist in the radar apparatus or the detection device on which the radar apparatus is installed as discrete components.

It may be understood that FIG. 13 shows merely a simplified design of the control apparatus. In an actual application, the control apparatus may include any quantity of transmitters, receivers, processors, controllers, memories, and another element that may exist.

The foregoing descriptions about implementations allow a person skilled in the art to clearly understand that, for the purpose of convenient and brief description, division of the foregoing function modules is only taken as an example for illustration. In actual application, the foregoing functions can be allocated to different function modules and implemented according to a requirement, namely, an inner structure of an apparatus is divided into different function modules to implement all or some of the functions described above.

For specific details, refer to the description in the foregoing method embodiment. Details are not described herein again.

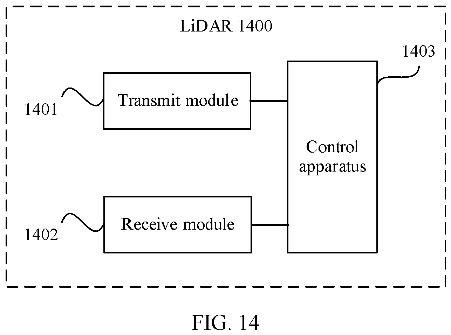

FIG. 3 provides the schematic diagram of the structure of the radar apparatus. Referring to the foregoing content, another optional manner is provided. FIG. 14 is still another possible schematic diagram of a structure of a radar apparatus. The LiDAR 1400 may include a transmit module 1401, a receive module 1402, and a control apparatus 1403 configured to perform any one of the foregoing method embodiments. The transmit module 1401 is configured to transmit a plurality of laser pulses in each subframe of a first frame. The receive module 1402 is configured to receive a plurality of signal pulses. For a function of the control apparatus 1403, refer to the foregoing related descriptions, and details are not described herein again. For a possible implementation of the transmit module 1401, refer to the foregoing description of the transmit module, for a possible implementation of the receive module 1402, refer to the foregoing description of the receive module, and details are not described herein again. An embodiment of this application further provides a chip system. The chip system includes at least one processor and an interface circuit. Further, optionally, the chip system may further include a memory or an external memory. The processor is configured to execute instruction and/or data interaction by using the interface circuit, to implement the method in the foregoing method embodiment. The chip system may include a chip, or may include a chip and another discrete device.

An embodiment of this application further provides a sensor system. The sensor system includes at least one control apparatus described above. Further, optionally, the sensor system further includes at least one camera.

An embodiment of this application further provides a means of transportation, for example, a vehicle, an unmanned aerial vehicle, or an unmanned vehicle, including the foregoing sensor system. Based on the described structure and function principles of the apparatus, this application may further provide a LiDAR. The LiDAR may include the apparatus in any one of the foregoing embodiments. Further, optionally, the LiDAR may further include a processor.

Based on the foregoing content and a same concept, this application provides a terminal device. The terminal device may include a control apparatus configured to perform any one of the foregoing method embodiments. Further, optionally, the terminal device may further include a memory, and the memory is configured to store a program or instructions. Certainly, the terminal device may further include another device, for example, a wireless control apparatus. For the control apparatus, refer to the description of the foregoing control apparatus. Details are not described herein again.

In a possible implementation, the terminal device may further include the transmit module 1401 and the receive module 1402. In other words, the terminal device may include the LiDAR 1400.

For example, the terminal device may be, for example, a vehicle (for example, an unmanned vehicle, a smart vehicle, an electric vehicle, or a digital vehicle), a robot, a surveying and mapping device, an unmanned aerial vehicle, a smart home device (for example, a television, a sweeping robot, a smart desk lamp, an acoustic system, an intelligent lighting system, an electrical control system, a whole home audio, a home theater system, an intercom system, or a video surveillance device), or an intelligent manufacturing device (for example, an industrial device), an intelligent transportation device (for example, an AGV, an unmanned transport vehicle, or a truck), an intelligent terminal (for example, a mobile phone, a computer, a tablet computer, a palmtop computer, a desktop computer, a headset, an acoustic device, a wearable device, an in-vehicle device, a virtual reality device, or an augmented reality device), or the like.

In the embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

An embodiment of this application further provides a computer-readable storage medium, including instructions. When the instructions are run on a computer, the computer is enabled to perform the methods described in the foregoing embodiments.

An embodiment of this application further provides a computer program product, including instructions. When the instructions are run on a computer, the computer is enabled to perform the methods described in the foregoing embodiments.

All or some of the methods in embodiments of this application may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device such as a server or a data center, including one or more usable media that are integrated. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

A person of ordinary skill in the art may be aware that in combination with examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a specific work process of the system, apparatus, and unit described above, refer to a corresponding process in the foregoing method embodiments. Details are not described herein again.

The units described as separate parts may or may not be physically separate, and parts displayed as units may or may not be physical units, namely, may be located in one position, or may be distributed on a plurality of network units. Some or all of the units may be selected depending on actual requirements to achieve the objectives of the solutions in the embodiments.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It is clearly that, a person skilled in the art may make various modifications and variations to this application without departing from the scope of this application. This application is intended to cover these modifications and variations of this application provided that they fall within the scope of protection defined by the following claims and their equivalent technologies.

## Claims

1. A detection method, comprising:
controlling a transmitter to transmit a plurality of laser pulses in each subframe of a first frame, wherein each subframe is corresponding to a group of distance subintervals, and the first frame comprises a plurality of subframes;
controlling a detector to receive a plurality of signal pulses, wherein the plurality of signal pulses comprise reflected signals for the plurality of laser pulses, and each of the plurality of signal pulses is corresponding to one distance subinterval in the group of distance subintervals; and
determining information about a target object in a same distance subinterval based on signal pulses that are in the plurality of signal pulses and that are corresponding to the same distance subinterval.

2. The method according to claim 1, wherein the determining information about a target object in a same distance subinterval based on signal pulses that are in the plurality of signal pulses and that are corresponding to the same distance subinterval comprises:
determining, based on the signal pulses that are in the plurality of signal pulses and that are corresponding to the same distance subinterval, a plurality of histograms corresponding to the same distance subinterval, wherein each distance subinterval of each subframe is corresponding to one histogram; and
determining the information about the target object in the same distance subinterval based on the plurality of histograms.

3. The method according to claim 1 or 2, wherein the transmitting a plurality of laser pulses in each subframe of a first frame comprises:
sequentially driving corresponding pixels on the transmitter in a first manner, to transmit the plurality of laser pulses corresponding to the first frame by using the transmitter.

4. The method according to any one of claims 1 to 3, wherein the method further comprises:
transmitting a plurality of laser pulses in each subframe of a second frame; and
the transmitting a plurality of laser pulses in each subframe of a second frame comprises:
sequentially driving the corresponding pixels on the transmitter in a second manner, to transmit the plurality of laser pulses corresponding to the second frame by using the transmitter, wherein the second manner is different from the first manner.

5. The method according to any one of claims 1 to 4, wherein the controlling a transmitter to transmit a plurality of laser pulses in each subframe of a first frame comprises:
controlling a vertical cavity surface emitting laser VCSEL to transmit the plurality of laser pulses in each subframe of the first frame; and/or
the controlling a detector to receive a plurality of signal pulses comprises:
controlling a single photon avalanche diode SPAD detector to receive the plurality of signal pulses.

6. The method according to claim 5, wherein the controlling a vertical cavity surface emitting laser VCSEL to transmit the plurality of laser pulses in each subframe of the first frame comprises:
controlling the VCSEL to transmit the plurality of laser pulses in each subframe of the first frame in a manner of cooperation with electrical scanning.

7. The method according to any one of claims 1 to 6, wherein
time lengths of distance subintervals in each subframe comprised in the first frame are the same in distribution; or
time lengths of distance subintervals in at least two subframes comprised in the first frame are different in distribution.

8. The method according to any one of claims 1 to 6, wherein frame lengths of all subframes comprised in the first frame are the same; or
the first frame comprises at least two subframes with different frame lengths.

9. The method according to any one of claims 1 to 8, wherein lengths of all distance subintervals in the group of distance subintervals are the same; or
the group of distance subintervals comprises at least two distance subintervals, and lengths of the at least two distance subintervals are different.

10. The method according to claim 9, wherein
for the group of distance subintervals, time lengths of the distance subintervals decrease sequentially according to a laser pulse transmission sequence; or
for the group of distance subintervals, time lengths of the distance subintervals first increase and then decrease according to a laser pulse transmission sequence.

11. A control apparatus, comprising at least one processing unit, wherein
the at least one processing unit is configured to control a transmitter to transmit a plurality of laser pulses in each subframe of a first frame, wherein each subframe is corresponding to a group of distance subintervals, and the first frame comprises a plurality of subframes;
the at least one processing unit is further configured to control a detector to receive a plurality of signal pulses, wherein the plurality of signal pulses comprise reflected signals for the plurality of laser pulses, and each of the plurality of signal pulses is corresponding to one distance subinterval in the group of distance subintervals; and
the at least one processing unit is further configured to determine information about a target object in a same distance subinterval based on signal pulses that are in the plurality of signal pulses and that are corresponding to the same distance subinterval.

12. The control apparatus according to claim 11, wherein the processing unit is specifically configured to:
determine, based on the signal pulses that are in the plurality of signal pulses and that are corresponding to the same distance subinterval, a plurality of histograms corresponding to the same distance subinterval, wherein each distance subinterval of each subframe is corresponding to one histogram; and
determine the information about the target object in the same distance subinterval based on the plurality of histograms.

13. The control apparatus according to claim 11 or 12, wherein the processing unit is specifically configured to:
sequentially drive corresponding pixels on the transmitter in a first manner, to transmit the plurality of laser pulses corresponding to the first frame by using the transmitter.

14. The control apparatus according to any one of claims 11 to 13, wherein the processing unit is further configured to:
control the transmitter to transmit a plurality of laser pulses in each subframe of a second frame; and
when controlling the transmitter to transmit the plurality of pulses in each subframe of the second frame, the processing unit is specifically configured to:
sequentially drive the corresponding pixels on the transmitter in a second manner, to transmit the plurality of laser pulses corresponding to the second frame by using the transmitter, wherein the second manner is different from the first manner.

15. The control apparatus according to any one of claims 11 to 14, wherein when controlling the transmitter to transmit the plurality of laser pulses in each subframe of the first frame, the processing unit is specifically configured to:
control a vertical cavity surface emitting laser VCSEL to transmit the plurality of laser pulses in each subframe of the first frame; and/or
when controlling the detector to receive the plurality of signal pulses, the processing unit is specifically configured to:
control a single photon avalanche diode SPAD detector to receive the plurality of signal pulses.

16. The control apparatus according to claim 15, wherein when controlling the VCSEL to transmit the plurality of laser pulses in each subframe of the first frame, the processing unit is specifically configured to:
control the VCSEL to transmit the plurality of laser pulses in each subframe of the first frame in a manner of cooperation with electrical scanning.

17. The control apparatus according to any one of claims 11 to 16, wherein time lengths of distance subintervals in each subframe comprised in the first frame are the same in distribution; or time lengths of distance subintervals in at least two subframes comprised in the first frame are different in distribution; or
frame lengths of all subframes comprised in the first frame are the same; or the first frame comprises at least two subframes with different frame lengths.

18. The control apparatus according to any one of claims 11 to 16, wherein lengths of all distance subintervals in the group of distance subintervals are the same; or
the group of distance subintervals comprises at least two distance subintervals, and lengths of the at least two distance subintervals are different.

19. The control apparatus according to claim 18, wherein
for the group of distance subintervals, time lengths of the distance subintervals decrease sequentially according to a laser pulse transmission sequence; or
for the group of distance subintervals, time lengths of the distance subintervals first increase and then decrease according to a laser pulse transmission sequence.

20. A control apparatus, comprising at least one processor and an interface circuit, wherein the interface circuit provides a program or instructions for the at least one processor, and the at least one processor enables, by using a logic circuit or executing the program or the instructions, a device in which the control apparatus is located to perform the method according to any one of claims 1 to 10.

21. A LiDAR, comprising a transmitter, a detector, and a controller, wherein
the controller is configured to: control the transmitter to transmit a plurality of laser pulses in each subframe of a first frame, wherein each subframe is corresponding to a group of distance subintervals, and the first frame comprises a plurality of subframes; control the detector to receive a plurality of signal pulses, wherein the plurality of signal pulses comprise reflected signals for the plurality of laser pulses, and each of the plurality of signal pulses is corresponding to one distance subinterval in the group of distance subintervals; and determine information about a target object in a same distance subinterval based on signal pulses that are in the plurality of signal pulses and that are corresponding to the same distance subinterval.

22. The LiDAR according to claim 21, wherein the controller is specifically configured to:
determine, based on the signal pulses that are in the plurality of signal pulses and that are corresponding to the same distance subinterval, a plurality of histograms corresponding to the same distance subinterval, wherein each distance subinterval of each subframe is corresponding to one histogram; and
determine the information about the target object in the same distance subinterval based on the plurality of histograms.

23. The LiDAR according to claim 21 or 22, wherein the controller is specifically configured to:
sequentially drive corresponding pixels on the transmitter in a first manner, to transmit the plurality of laser pulses corresponding to the first frame by using the transmitter.

24. The LiDAR according to any one of claims 21 to 23, wherein the controller is further configured to:
control the transmitter to transmit a plurality of laser pulses in each subframe of a second frame; and
when controlling the transmitter to transmit the plurality of pulses in each subframe of the second frame, the controller is specifically configured to:
sequentially drive the corresponding pixels on the transmitter in a second manner, to transmit the plurality of laser pulses corresponding to the second frame by using the transmitter, where the second manner is different from the first manner.

25. The LiDAR according to any one of claims 21 to 24, wherein time lengths of distance subintervals in each subframe comprised in the first frame are the same in distribution; or time lengths of distance subintervals in at least two subframes comprised in the first frame are different in distribution; or
frame lengths of all subframes comprised in the first frame are the same; or the first frame comprises at least two subframes with different frame lengths.

26. The LiDAR according to any one of claims 21 to 25, wherein lengths of all distance subintervals in the group of distance subintervals are the same; or
the group of distance subintervals comprises at least two distance subintervals, and lengths of the at least two distance subintervals are different.

27. A LiDAR, comprising the control apparatus according to any one of claims 11 to 20.

28. A terminal device, wherein the terminal comprises the control apparatus according to any one of claims 11 to 20, or comprises the LiDAR according to any one of claims 21 to 27.

29. A computer-readable storage medium, wherein the computer-readable storage medium stores a computer program or instructions, and when a detection apparatus executes the computer program or the instructions, the method according to any one of claims 1 to 10 is implemented.

30. A computer program product, wherein the computer program product comprises a computer program or instructions, and when a detection apparatus executes the computer program or the instructions, the method according to any one of claims 1 to 10 is implemented.
